# EUROPEAN PATENT APPLICATION

(11) **EP 1 223 143 A2**
(43) Date of publication of application: **17.07.2002**
(21) Application number: 02075457.8
(22) Date of filing: 29.06.1999
(51) Int. Cl.: C01B 3/38

(54) **Methane-steam reforming**

(30) Priority: 29.06.1998 NL 1009510
(62) Divisional of application: 99929962.1
(71) Applicant: GASTEC N.V., NL-7327 AC Apeldoorn (NL)
(72) Inventor: Geus, John Wilhelm, 3723 GJ Bilthoven (NL)
(74) Representative: Prins, Adrianus Willem

(57) **Abstract**

The invention relates to a method for producing synthesis gas from methane by making use of a bed of a metal oxide which is reduced by reaction with methane to a lower-valence oxide or to the corresponding metal, wherein the reducible oxide is reoxidized with air in a separate step, and wherein in the reducible oxide a (precursor of a) reforming catalyst is mixed, so that the reaction of methane with steam and with carbon dioxide can proceed in the same reactor.

## Description

This invention relates to the production of synthesis gas, a mixture of carbon monoxide and hydrogen, from natural gas.

According to the present state of the art, synthesis gas is produced from methane in two different ways. Methane can be allowed to react with steam according to CH4+H2O=CO+3H2. Processes based on this reaction are known as (methane-steam) reforming processes. The other method is based on the reaction of methane with a minor proportion of oxygen according to 2CH4+O2=2CO+4H2. Processes based on this reaction are known as partial oxidation processes.

The reaction CH₄+H₂O=CO+3H₂ is highly endothermic; the heat of reaction is 206.4 kJ. Because the processing of synthesis gas typically requires an elevated pressure, it is attractive to allow methane and steam to react at elevated pressure. However, this involves a shift of the equilibrium in an unfavorable sense. In two ways, the required heat of reaction can be generated and supplied to the system, viz. by an allothermic or an autothermic method.
'Allothermic' means that the heat of reaction is generated outside the reaction system and is supplied to the system through a non-permeable wall.
'Autothermic' means that the thermal energy is made available in the reaction system itself by simultaneously carrying out an exothermic reaction. The present exothermic reaction is the highly exothermic oxidation of methane with oxygen to carbon dioxide and water. This procedure is sometimes referred to as autothermic reforming. When the required thermal energy is generated in the reaction system, no costly non-permeable partition is needed. To avoid undue dilution by nitrogen, however, nearly always pure oxygen must be used for oxidation of methane. The investment costs and the variable costs of an air separation plant are considerable. Also for the above-mentioned partial oxidation processes, in most cases pure oxygen is needed.

According to the most conventional method, the procedure of synthesis gas occurs by reaction of methane with steam. As mentioned above, the thermal energy required for this highly endothermic reaction to proceed can be supplied to the reaction mixture in two fundamentally different ways. A suitable catalyst, mostly nickel on □-aluminum oxide or magnesium aluminate, can be provided in a (vertical) tube system of an alloy which at a high temperature is resistant to an oxidizing gas atmosphere. Through external heating, with the heat transfer occurring substantially through radiation, the thermal energy is supplied to the reaction system. An advantage of this method is that only natural gas and steam are needed, in addition to heating gas or fuel oil for the external heating. Pure oxygen is not needed here. A disadvantage of the method is that at higher pressures, which is attractive from the viewpoint of energy efficiency, the temperature must be raised so high that the life of the material is greatly limited. Therefore, according to the prior art, the above method is often combined with the alternative method of generating the required thermal energy, viz. the autothermic generation of the required thermal energy. A part of the natural gas to be processed is converted in the so-called primary reformer, which consists of pipes which are externally heated. Because no high conversion needs to be accomplished, it is possible to work at a temperature level where the life of the pipes is long. After mixing with air or oxygen, the remaining methane is allowed to react in the secondary reformer according to the autothermic reforming process.

In ammonia synthesis, a mixture of hydrogen and nitrogen is required. There the secondary reformer is operated with such an amount of air that after conversion of the carbon monoxide to hydrogen in a high and low temperature carbon monoxide shift conversion reactor according to CO+H₂O=CO₂+CO₂+H₂, a mixture having a molecular ratio of hydrogen to nitrogen of three is obtained. For the production of methanol and for the Fischer-Tropsch synthesis, the secondary reformer is generally operated with pure oxygen.

In the partial oxidation of methane, such a methane/oxygen ratio is used that formation of carbon dioxide, water and soot is possible. Technically, the removal of soot presents quite some problems, and the high temperatures at which the process is carried out impose requirements on the equipment. This holds not so much for the reactor, which is internally lined with refractory brick, but especially for the plants in which the high thermal energy of the gas stream is recovered.

If the partial oxidation of methane is carried out over a suitable catalyst, this is called catalytic partial oxidation. In that case, lower temperatures can be employed. It is then essential, however, to prevent the deposition of carbon on the catalyst. At the moment, catalysts that satisfy the high requirements set in this regard are not yet in use in technical plants.

When autothermic reforming or partial oxidation is carried out, pure oxygen is needed. One enterprise, Syntroleum, has proposed to work with air and subsequently to further process the highly diluted mixture of synthesis gas and nitrogen. In plants in inaccessible regions and in offshore plants, the use of allothermic reforming processes is less attractive. In these processes, a great deal of high pressure steam is liberated, for which it is difficult to find a useful application under the conditions referred to. Nor is it possible in offshore plants, because of the relatively small capacity, to operate an air separation plant economically. By way of alternative, therefore, sustained efforts are directed towards ceramic membranes capable of selectively passing oxygen. On the permeate side of such membranes, the autothermic reforming or the partial oxidation is then carried out. However, such membranes are not yet available either for technical application with sufficiently large surfaces.

Drawbacks of the present state of the art are therefore the necessity of having pure oxygen available and the utilization of the thermal energy released upon the cooling of the gas stream from the secondary reformer or the partial oxidation reactor. The object of the present invention is to obviate these drawbacks.

It has previously been proposed to circumvent the production of pure oxygen by making use of a metal oxide which can be reduced by methane to the corresponding metal or a lower-valence metal oxide. In a separate reaction step, the metal or the lower-valence metal oxide is reoxidized with air. The thermal energy liberated in the reoxidation by air and the reaction with methane must be utilized for the reaction of methane with steam. In effect, therefore, an autothermic reforming process is operated, in which the reaction with the metal oxide replaces the reaction of methane with oxygen. According to the present state of the art, the thermal energy generated in the reactions with the metal oxide is passed with methane and steam to a reactor with a catalyst which accelerates the reaction between methane and steam. This requires, however, that either the temperature of the gas stream be raised to a high value or the gas stream be strongly diluted with an inert gas, preferably steam. At a highly elevated temperature, such requirements are imposed on the thermal stability of the reactor and the metal oxide that this condition cannot be properly satisfied. Strong dilution of the gas stream with, for instance, steam, strongly reduces the thermal efficiency of the process.

Surprisingly, it has now been found that mixing the bed of the oxide to be oxidized and reduced, with a catalyst which accelerates the reaction between steam and methane enables the reaction between methane and steam to proceed in one reactor. According to the invention, therefore, a catalyst or a material that yields a reforming catalyst upon reduction is added to the metal oxide reducible with methane.

According to a special embodiment of the method according to the invention, as reducible oxide, copper oxide or manganese oxide is used, provided on a suitable thermostable support, such as aluminum oxide or zirconium dioxide. Because the manganese oxide is reduced to a lower-valence manganese oxide, if desired, finely divided manganese oxide without support can be used. Used as catalyst for the reforming reaction are nickel oxide or platinum provided on thermostable supports such as titanium dioxide, aluminum oxide or zirconium dioxide. Preferably used are catalysts whose metal particles are smaller than 3 nm and more preferably smaller than 2 nm. To prevent filamental carbon growth, it is essential that not more than 5% by weight and preferably not more than 1% by weight of the catalytically active metal present in the catalyst be present as larger particles.

In the method according to the invention, methane which may or may not be mixed with steam is passed through the bed with the oxidized catalyst and the reforming catalyst. Initially, only carbon dioxide and hydrogen leave this reactor. Primarily, methane reacts with the reducible oxides to carbon dioxide and water, these compounds forming carbon monoxide and hydrogen with the unreacted methane. However, carbon monoxide and hydrogen will rapidly react with the reducible oxide to form carbon dioxide and water. Only when the greater part of the metal oxide present in the reactor has been reduced will methane react with steam and carbon dioxide to form carbon monoxide and hydrogen. According to a special embodiment of the method according to the invention, therefore, the high-temperature gas mixture initially flowing from the reactor is recycled to the input of the reactor, whereafter, mixed with methane, it is passed through the reactor again. In case of a plug flow through the reactor, an abrupt increase of the hydrogen and carbon monoxide content will be observed in the gas mixture flowing from the reactor. At that moment, the recirculation of the gas mixture flowing from the reactor is stopped and only methane and steam are supplied to the reactor. Naturally, such a process according to the invention can also be realized in a different way, for instance by utilizing several reactors.

It is of importance that the thermal energy released in the reoxidation of the reducible metal oxide be stored in the reactor as well as possible. Therefore, according to the invention, inert material of a high heat capacity is added to the reactor to store thermal energy in the reactor at a controlled temperature. According to the invention, by utilizing a reactor of sintered metal particles, the distribution of the thermal energy in the reactor can be promoted.

According to a special form of the method according to the invention, a circulating fluidized bed is used. The reaction of methane with the oxidized metal oxide occurs in a fluidized bed. At the lower end of the fluidized bed, methane is supplied, and at a level of one-third to half of the height of the fluidized bed, methane and steam are passed into the reactor. The reduced metal oxide is subsequently passed to a fluidized bed reactor in which the reoxidation takes place. This mode of the method according to the invention leads to a relatively compact reactor, while pure oxygen is not required.
However, it will be preferred to reoxidize with air having the same pressure as that at which the methane is fed to the reactor.

A combination of generating electricity and producing synthesis gas is extremely attractive. The high thermal energy of the gas stream obtained in the production of synthesis gas can be much less efficiently converted to electricity by generating steam. Especially for smaller plants, as in offshore production, it is attractive to utilize a gas turbine.

According to the invention, a mixture of methane and pure oxygen is supplied to an oxidation catalyst at an input temperature sufficiently high to initiate the catalytic reaction. Preferably, the oxidation catalyst is provided on the walls of a monolith, preferably a metal monolith. The oxidation catalyst raises the temperature of the gas flow to a sufficiently high value to enable the homogeneous gas phase reaction to proceed fast. Extensive experiments have taught that the initiation temperature of the homogeneous gas phase reaction between methane and oxygen is between 700 and about 800°C. At higher pressures, these temperatures are not essentially different. In the zone where the homogeneous gas phase reaction proceeds, now an additional amount of methane is introduced, mixed with steam if necessary, so that the reactions of methane with steam and with carbon dioxide to carbon monoxide and hydrogen start to proceed. In the homogeneous gas phase these reactions first proceed at a temperature level above about 1400°C. Therefore, the amount of oxygen and methane is chosen such that so high a temperature is obtained that upon completion of the reactions, the gas flow has the desired inlet temperature for the gas turbine.

In principle, in the latter mode of the method according to the invention, no oxidation catalyst is needed. The homogeneous gas phase reaction could be allowed to proceed in the conventional manner, in a burner. To prevent soot formation, however, it is essential that the different components in the gas flow be mixed very well. Over a cross section perpendicular to the direction of flow, the composition of the gas flow may vary not more than 10%, preferably not more than 5% and more preferably not more than 2% according to this special embodiment of the method according to the invention. Admixing methane and, if necessary, steam, in the zone where the homogeneous gas phase oxidation proceeds, however, is exceptionally difficult to carry out in a homogeneous manner. Therefore, according to the invention, in the construction in which the oxidation catalyst is provided, which is mostly a monolith and preferably a metal monolith, channels have been provided through which a methane flow or a methane-steam flow can be introduced in the zone of the homogeneous gas phase reaction without catalytic reaction but with efficient preheating.

The present state of the art for the application of catalytic oxidation in operating gas turbines has worked out suitable solutions for this. The Central Research Institute of the Electrical Power Industry of Japan and the Kansai Electric Power Co., Inc., Japan, have worked out extremely suitable practical modes for this. The enterprise Catalytica, California, U.S.A., has also published a good practical mode of accomplishing extremely good mixing. In all these cases, a methane-air mixture is introduced into the zone in which the homogeneous gas phase oxidation takes place. According to the invention, these constructions are used to introduce methane, methane with steam or, if necessary, methane with a minor proportion of oxygen, and optionally steam, homogeneously mixed, into the homogeneous oxidation zone. In deviation of the use of such practical modes in the normal use of gas turbines, and in accordance with the present invention, not methane with air is brought into the homogeneous oxidation zone, but methane, methane with steam or methane with a minor proportion of pure oxygen. At the front of the oxidation catalyst, therefore, the gas mixture to be injected into the homogeneous oxidation zone via the catalyst structure is passed to the catalyst structure separately from the gas mixture to be introduced into the catalyst structure. This is necessary because the gas composition differs from the gas composition processed in the oxidation catalyst. Preferably, the walls of lines passing through the catalyst structure are covered with a layer, or made of a material, such that decomposition of methane does not proceed at the elevated temperature within the catalyst structure. Copper or bronze lines satisfy this condition, provided the temperature within the catalyst structure does not exceed about 1000°C. It should be borne in mind here that due to the fact that the heat transfer from the catalyst surface to the gas phase proceeds less fast than the mass transfer from the gas phase to the catalyst surface, the temperature of the catalyst is up to about 200°C higher than the temperature of the gas flow.

Obviously, in the homogeneous reaction zone, too, no carbon deposition on the wall of the reaction zone may occur. According to the invention, this is prevented by constructing the wall of this zone from a material as silicon carbide. Since the mechanical strength of materials such as silicon carbide is generally not sufficient for use at elevated pressures, for instance 30 bar in gas turbine applications, generally a suitable metal construction is provided around the silicon carbide structure. Across the silicon carbide, the temperature falls to a level at which the surrounding metal can be used without objections.

The invention is further defined by the following embodiments and preferred embodiments:
1. Production of synthesis gas from methane by making use of a bed of a metal oxide which is reduced by reaction with methane to a lower-valence oxide or to the corresponding metal, wherein the reducible oxide is reoxidized with air in a separate step, characterized in that in the reducible oxide a (precursor of a) reforming catalyst is mixed, so that the reaction of methane with steam and with carbon dioxide can proceed in the same reactor.
2. Production of synthesis gas according to 1, characterized in that copper oxide or manganese oxide is used as reducible oxide and that nickel and/or a metal from the second and third long period of the periodic system of group VIII is used as reforming catalyst.
3. Production of synthesis gas according to 1 and 2, characterized in that during the reduction step the gas mixture leaving the reactor is initially recirculated through the reactor together with fresh methane, whereafter at the moment when hydrogen and carbon monoxide start to occur in the egressive gas stream, recirculation is stopped.
4. Production of synthesis gas according to 1 to 3, characterized in that the catalytically active metal particles of the reforming catalyst are smaller than 3 nm and preferably smaller than 2 nm, while not more than 5% by weight and preferably not more than 1% by weight of the active metal present occur as particles greater than 3 or 2 nm.
5. Production of synthesis gas according to 1 to 4, characterized in that inert material of a high specific heat is introduced into the reactor.
6. Production of synthesis gas according to 1 to 4, characterized in that the reducible metal oxide and the reforming catalyst are present in a recirculating fluidized bed, while at the bottom of the fluidized bed methane is injected, as well as at one-third to half the height of the fluidized bed, while the oxide reduced by methane is reoxidized in the line through which the solids mixture is recirculated to the fluidized bed.

## Claims

1. Production of synthesis gas and generation of electricity in a gas turbine, wherein a catalytic oxidation reactor is supplied with a mixture of methane and pure oxygen of a methane to oxygen ratio such that the methane can react completely to carbon dioxide and water, wherein the catalytic reaction raises the temperature of the gas flow sufficiently to initiate the homogeneous gas phase oxidation, and wherein, homogeneously mixed, additional methane is introduced into the homogeneous oxidation zone, resulting in a minor proportion of oxygen relative to methane, whereafter the resultant gas mixture is finally passed through a gas turbine.

2. Production of synthesis gas and generation of electricity according to claim 1, **characterized in that** the oxidation catalyst is provided on the walls of a monolith and preferably of a metal monolith.

3. Production of synthesis gas and generation of electricity according to claims 1 and 2, **characterized in that** the gas in the homogeneous oxidation zone is very well mixed, so that the composition measured in a volume of 1 ml in a cold flow experiment does not deviate more than 5% and preferably not more than 3% from the average composition of the gas flow.

4. Production of synthesis gas and generation of electricity according to claim 1, **characterized in that** the methane is introduced into the homogeneous gas phase reaction zone through lines running through the catalyst construction.

5. Production of synthesis gas and generation of electricity according to claim 4, **characterized in that** for the material of the lines a metal or alloy is used which is not susceptible to the deposition of carbon from methane at elevated temperature, or that the wall of the line is covered with a material that does not promote the deposition of carbon.

6. Production of synthesis gas and generation of electricity according to claim 4, **characterized in that** the wall of the combustion chamber (the homogeneous oxidation zone) consists of a material as silicon carbide.
